**Europäisches Patentamt**

**European Patent Office**

**Office européen des brevets**

(19)

(11) Veröffentlichungsnummer: **0 128 362**

**B1**

(12)

# EUROPÄISCHE PATENTSCHRIFT

(45) Veröffentlichungstag der Patentschrift:
**23.11.88**

(51) Int. Cl.⁴: **G 06 F 12/14,** G 07 F 7/10

(21) Anmeldenummer: **84105258.2**

(22) Anmeldetag: **09.05.84**

(54) Schaltungsanordnung mit einem Speicher und einer Zugriffskontrolleinheit.

(30) Priorität: **18.05.83 DE 3318101**

(43) Veröffentlichungstag der Anmeldung:
**19.12.84 Patentblatt 84/51**

(45) Bekanntmachung des Hinweises auf die Patenterteilung:
**23.11.88 Patentblatt 88/47**

(84) Benannte Vertragsstaaten:
**AT DE FR GB IT SE**

(56) Entgegenhaltungen:
**EP-A-0 044 039**
**FR-A-2 311 360**
**FR-A-2 401 459**
**FR-A-2 460 506**
**FR-A-2 471 000**
**FR-A-2 503 424**
**US-A-4 105 156**

(73) Patentinhaber: **Siemens Aktiengesellschaft Berlin und München, Wittelsbacherplatz 2, D-8000 München 2 (DE)**

(72) Erfinder: **Schrenk, Hartmut, Dr. Phys., Fasanenweg 22, D-8013 Haar (DE)**

EP 0 128 362 B1

LIBER, STOCKHOLM 1988

## Beschreibung

Die Erfindung betrifft eine monolithisch integrierbare Schaltungsanordnung nach dem Oberbegriff des Patentanspruchs 1.

Zum bargeldlosen Bezahlen von Waren oder zum Abrechnen von Dienstleistungen und ähnlichem sind datengesteuerte Zahlungssysteme bekannt, die beispielsweise in der Zeitschrift "Betriebspraxis", B.BL.2/1982, Seite 48, von Dr. R. Nowak und W. Röder unter dem Titel "Die Chip-Karte - nächste Generation der Automatenkarte" beschrieben sind. Die dabei verwendeten Karten tragen als ein wesentliches Element einen nichtflüchtigen, elektrischen Datenspeicher, auf den über elektrische Kontakte an der Kartenoberfläche zugegriffen werden kann. Über ein Kartenlesegerät wird von einer Recheneinheit bei jedem Gebrauch auf den Speicherinhalt zugegriffen, der dabei gegebenenfalls geändert wird.

Zur Anwendung kommen derartige Karten in Sicherheits- und Zugriffssystemen, in Abrechnungs- oder Registriersystemen und in Debit- oder Kreditsystemen. Um eine weite Verbreitung und häufigen Gebrauch der Karten zu gewährleisten, gibt es Betreiber solcher Systeme, die eine Vielzahl von Karten ausgeben, und die ein weitverzweigtes Netz von Lesegeräten und Rechenanlagen anbieten. Um Mißbräuche der Daten auszuschließen, müssen hohe Sicherheitsforderungen an die Kartensysteme gestellt werden. Besonders die Trägerkarten, deren Verbreitung nicht immer kontrollierbar ist, müssen vor einer Benutzung durch Unberechtigte geschützt werden.

Dies kann durch eine Freigabeoperation erreicht werden, bei welcher ein Datenvergleich zwischen einem von einer Bedienperson eingegebenen oder von einer Rechenanlage verschlüsselten Codewort mit einem abgespeicherten Referenzwort durchgeführt wird und abhängig vom Vergleichsergebnis der Zugriff freigegen bzw. unterbunden wird. Durch eine Verlängerung des Codewortes läßt sich praktisch ausschließen, daß ein Betrüger durch Zufall oder systematisches Probieren den verwendeten Code errät. Auch ein persönlicher Identifikationscode, der aus praktischen Gründen nur wenige Zeichen umfassen darf, kann über einen Rechner auf einen nicht mehr entschlüsselbaren Umfang ausgedehnt werden.

Aus der FR-PS-2 401 459 ist bekannt, ein Mikroprozessorsystem mit einem Datenspeicher zu versehen, der in drei Speicherbereiche mit unterschiedlichen Zugriffsbedingungen aufgeteilt ist. Ein erster, geheimer Bereich ist auf keinen Fall extern zugänglich. Zwei weitere Bereiche sind extern lediglich beschreibbar bzw. lesbar.

In der FR-PS-2 471 000 ist ein vor unberechtigtem Zugriff geschützter integrierter Schaltkreis zur Verwendung auf einer Kreditkarte beschrieben. Die Funktion der zugehörigen Kontrolleinheit beruht darauf, daß aus einer vorgegebenen Anzahl von Versuchen, ein Codewort einzugeben, alle gültigen und alle ungültigen Eingaben in der Reihenfolge ihres Auftretens gezählt werden. Falls eine vorgegebene Anzahl von Fehlversuchen unmittelbar aufeinanderfolgen, wird der Schaltkreis außer Funktion gesetzt.

Ferner ist aus der FR-PS-2 460 506 eine weitere derartige Kontrolle bekannt, bei welcher die Vergleichsergebnisse (gültig bzw. ungültig) des abgespeicherten Schlüsselwortes und der eingegebenen Codewörter symmetrisch zueinander in zwei getrennten Speichern abgespeichert werden.

Der Erfindung lag die Aufgabe zugrunde, eine Schaltungsanordnung der oben genannten Art anzugeben, mit welcher eine Freigabeoperation durchführbar ist, die mit hoher Wahrscheinlichkeit einen unberechtigten Zugriff auf den Speicher verhindert.

Diese Aufgabe wird gelöst durch die Merkmale des kennzeichnenden Teils des Patentanspruchs 1.

Jede Freigabeoperation wird vor Erlangung der Freigabe durch eine interne Logikeinheit in Verbindung mit einer externen Steuerung nicht-flüchtig registriert. Bevor ein Zugriff zu den gesicherten Speicheradressen möglich ist, muß nach Durchführung sämtlicher Vergleichsoperationen noch mindestens eine Speicherzelle mit einem Freigabekennzeichen beschrieben und wieder gelöscht worden sein. Während des Schreibvorgangs weiß der Benutzer nicht, ob eine Freigabe- oder aber eine Fehlerkennzeichnung nicht-flüchtig gespeichert ist. Nach jedem Fehlversuch bleibt ein zusätzliches Fehlerkennzeichen gesetzt. Das Löschen der Kennzeichen ist nur möglich, wenn das Freigabekennzeichen gesetzt war. Nach dem Setzen einer vorgegebenen Anzahl von Fehlerkennzeichen ist die Freigabe des Speichers durch weitere Freigabeversuche nicht mehr zu erlangen.

Die Erfindung hat neben dem Aufbau mit einfachen Funktionsgruppen den Vorteil, daß zum Gebrauch nicht zugelassene Daten erkannt werden. Sie bietet Schutz gegen mißbräuchliche Datenänderungen und unberechtigtes Duplizieren von betriebsbereiten Karten.

Auch die Kenntnis der elektrischen Spezifikation oder des inneren Aufbaus der Kontrolleinheit führt nicht zur Preisgabe von Daten, die zur erfolgreichen Durchführung einer Freigabeoperation notwendig sind. Systematische Untersuchungen zur Entschlüsselung der geheimen Codedaten werden durch eine Begrenzung der zulässigen Versuche verhindert. Das nach einer erfolgreichen Freigabeoperation erzeugte Freigabesignal ist nicht an den Schnittstellen der Karte zur Rechenanlage abgreifbar. Der Erfolg oder Mißerfolg einer Freigabeoperation kann erst nach Abschluß sämtlicher Vergleichsoperationen sowie der Schreib- und Löschoperationen an der Möglichkeit des Speicherzugriffs erkannt werden.

Ein hoher Schutz vor betrügerischen Manipulationen ist ferner dadurch gegeben, daß die Adressen des Codewortbereichs unter keinen Umständen auslesbar sind, auch nicht nach einer Freigabe des Speicherzugriffs. Der Inhalt des Codewortbereichs kann also nur über die Freigabeoperation selbst, d. h. bei vorheriger Kenntnis der gespeicherten Daten überprüft werden.

Weiterbildungen der Erfindung ergeben sich aus den Unteransprüchen.

Im folgenden wird die Erfindung anhand eines Ausführungsbeispiels weiter beschrieben.

Figur 1 zeigt schematisch eine Anlage zum Datenaustausch zwischen einer Trägerkarte und einer Rechenanlage.

Figur 2 zeigt ein Blockschaltbild einer Schaltung mit Speicher und Zugriffkontrolleinheit.

Fig 3 und Fig 4 zeigen zusammen beispielhaft Einzelheiten der Schaltung nach Figur 2.

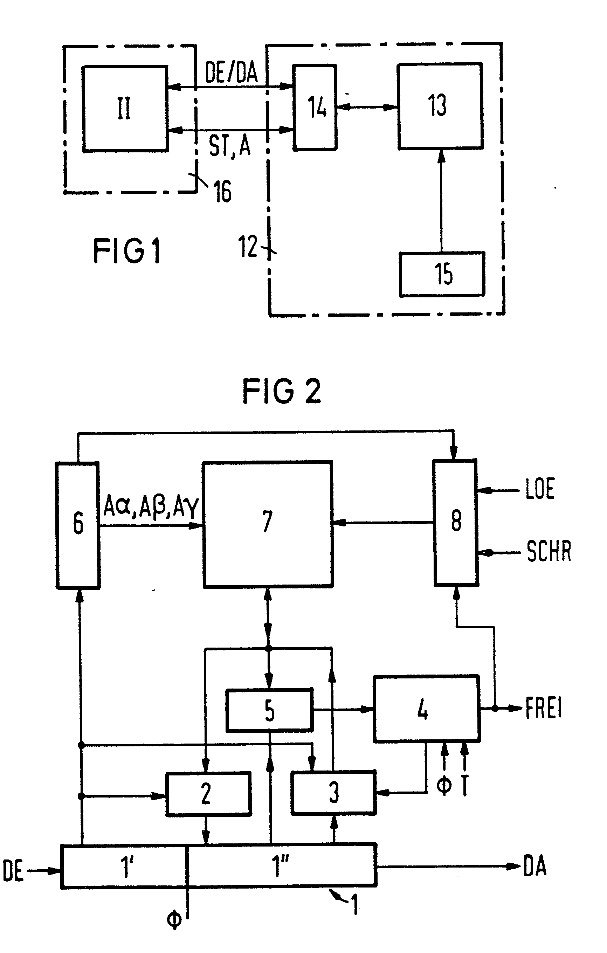

Figur 1 zeigt die in den Figuren 2, 3, 4 im einzelnen beschriebene Schaltungsanordnung II in Wirkungszusammenhang mit anderen Funktionseinheiten. Die Schaltung II ist in eine Trägerkarte 16 eingebettet. Durch Einstecken in eine Kartenaufnahme eines Kartenlesegerätes 12 kann über eine Kontaktierungsvorrichtung 14 ein Datenaustausch auf Dateneingabe- bzw. Datenausgabeleitungen DE, DA mit einer Rechenanlage 13 erfolgen, derartige Trägerkarten 16 sind beispielweise als Kredit- oder Debitkarten einsetzbar. Kartenlesegeräte 12 kommen beispielsweise als Geldausgabeautomaten zur Anwendung. Daneben sind derartige Schaltungen II auch ohne ein kartenförmiges Trägermedium zum Einsatz in zugriffsgesicherten Anlagen geeignet.

Ein uneingeschränkter Datenaustausch, beispielsweise um eine Geldausgabe zu bewirken, erfolgt nur dann, wenn von der Schaltungsanordnung II ein Freigabesignal erzeugt worden ist. Diese Voraussetzung ist nach einer erfolgreichen Freigabeoperation gegeben. Sofern es für die Kartenbenützung erforderlich ist, gibt dabei der Benutzer ein oder mehrere individuelle Codewörter über eine Dateneingabeeinheit 15 an die Rechenanlage 13 zur Weitergabe an die Schaltung II ein. Während der Freigabeoperation ist der Datenaustausch soweit beschränkt, daß ausschließlich nur die zur Prüfung erforderlichen Operationen durchführbar sind. Dazu gehört die Abgabe von Steuer- und Adreßsignalen über Leitungen ST, A an die Schaltungsanordnung II.

Im Zusammenhang mit der Beschreibung der folgenden Figuren gilt ein Signal dann als wirksam, wenn es von den beiden logischen Pegeln 0 bzw. 1 den höherwertigen Pegel 1 einnimmt.

Das Blockschaltbild in Figur 2 zeigt die Funktionseinheiten einer monolithisch integrierten Schaltung zur Verarbeitung von binär codierten Daten. Es besteht aus einem Schieberegister 1, welches aus einem Adressregister 1' und einem Datenregister 1'' zusammengesetzt ist. Der Speicherbereich eines nicht flüchtigen, elektrisch löschbaren, programmierbaren Speichers 7 ist in einen Anwender-, einen Code- und Operationsdatenspeicher aufgeteilt, deren Adressbereiche von einem Adressdecoder 6 über die Adressleitungen $A_\alpha$, $A_\beta$, $A_\gamma$ festgelegt sind.

Lese-Schreib- und Löschsteuerungen 2, 3 beeinflussen abhängig von den Adressbereichen den Zugriff auf den Speicher 7. Lösch- und Schreibsignale LOE, SCHR gelangen über eine Zeilensteuerung 8 an die Steuerleitungen des Speichers 7.

In einer Datenvergleichseinheit 5 werden die im Codedaten- bzw. Operationsdatenbereich abgespeicherten Referenzdaten mit den im Datenregister 1'' eingegebenen Daten verglichen. Die Datenvergleichslogik 5 erzeugt abhängig vom Vergleichsergebnis und abhängig von verschiedenen, in aufeinanderfolgenden Zeitintervallen durchzuführenden Vergleichsoperationen Ausgangssignale, welche an eine Ablaufsteuerung 4 geführt sind. Sie umfaßt einen Komparator 57 und zwei Zustandsänderungsanzeiger 58, 59 mit folgenden Aufgaben: Als erstes vergleicht sie ein Codewort aus dem Datenregister 1'' auf vollständige Übereinstimmung mit einem Referenzcodewort aus dem Codedatenspeicher. Daran schließt sich eine Prüfung eines Teils des Operationsdatenspeichers (zweiter Operationsdatenbereich) an, welche feststellt, ob im Verlauf des Vergleichs von einem oder mehreren Codedaten der zuvor gelöschte Operationsspeicher mit einem oder mehreren Fehlerkennzeichnungen beschrieben wurde, oder ob ein weiterer Bereich des Operationsdatenspeichers (erster Operationsdatenbereich) mit einem Kennzeichen für eine fehlerfreie Prüfung beschrieben wurde. Gegebenenfalls werden diese Zustandsänderungen mit einem zweiten bzw. ersten Zustandsänderungssignal VOK, SOK angezeigt. Der die Fehlerkennzeichnungen aufnehmende zweite Operationsdatenbereich wird im folgenden Fehleranzeigeregister genannt. Der erste Operationsdatenbereich zur Aufnahme des Kennzeichens für eine fehlerfreie Prüfung wird als Freigabeanzeigeregister bezeichnet.

Die Ablaufsteuerung 4 bestimmt den zeitlichen Ablauf der Lese-Schreib- und Löschoperationen unter Berücksichtigung der von der Datenvergleichslogik 5 erzeugten Ausgangssignale. Sie legt fest, daß nach einer Leseoperation bzw. einem Datenvergleich mindestens eine Speicherzelle im Operationsdatenspeicher überschrieben und wieder gelöscht wird, bevor das Freigabesignal erzeugt wird. Die Seitabschnitte, innerhalb derer die Operationen ablaufen, sind durch die vier Taktsignale T = T1, T2, T3, T4 getrennt.

In das Schieberegister 1 wird unter einem Schiebetakt Ø ein einzugebendes Datenwort über Eingangsdatenleitungen DE eingeschrieben bzw. ein auszugebendes Datenwort auf Datenausgangsleitungen DA ausgelesen.

Die drei Adressbereiche des Speichers 7 sind durch die Lese-Schreib- und Löschsteuerung 2, 3, 9 mit unterschiedlichen Zugriffseigenschaften versehen. Ein Auslesen der Daten, ein Löschen oder Schreiben des Anwenderbereichs ist je nach Anwendungsfall nur beim Auftreten eines Freigabesignals FREI möglich. Während ein Auslesen der beiden Operationsdatenbereiche uneingeschränkt möglich ist, ist das Auslesen des Codedatenbereichs wegen einer Lesesperre unter keinen Umständen möglich.

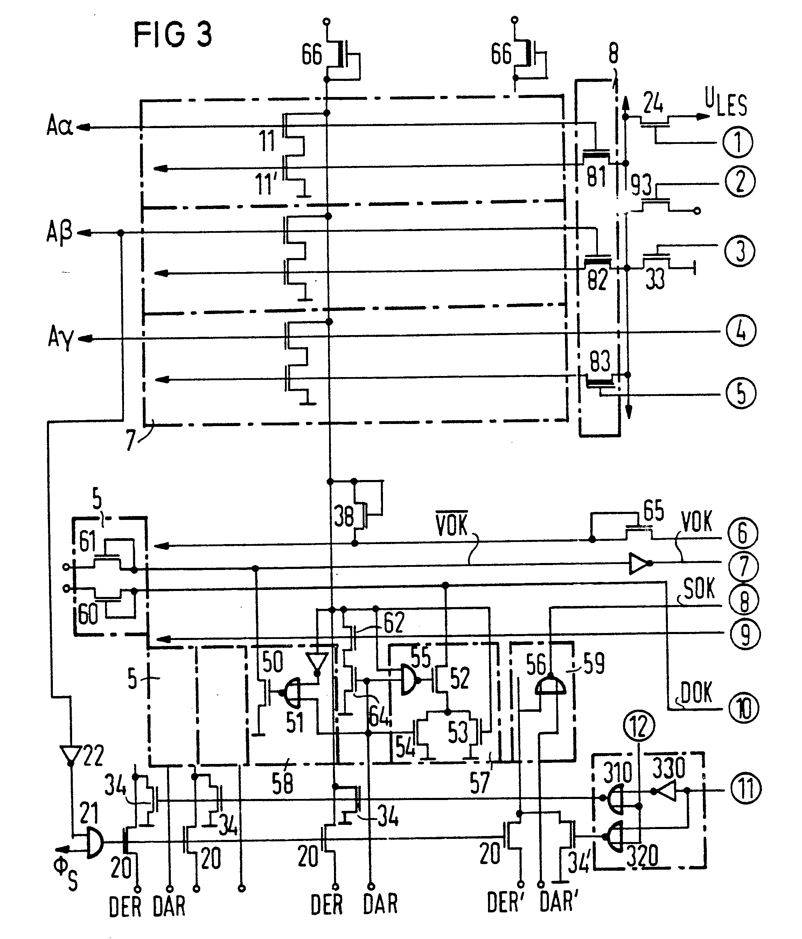

Wie Figur 3 zeigt, besteht der Speicher 7 aus zeilen- und spaltenweise geordneten Speicherzeilen mit jeweils einem Auswahl-MOS-FET 11 und einem Speicher-MOS-FET 11'. Alle Steuereingänge der Auswahl MOS-FETs 11 einer Zeile sind jeweils über eine der Adressleitungen $A_\alpha$, $A_\beta$, $A_\gamma$ mit dem Adressdecoder 6 verbunden. Die Speicher-MOS-FETs 11' sind über Programmierleitungen von der Zeilensteuerung 8 ansteuerbar. Die Spaltenleitungen zum Schreiben bzw. Auslesen der Speicherzellen sind über die hintereinandergeschalteten gesteuerten Strecken der Auswahl MOS-FETs 11 und der Programmier-MOS-FETs 11' mit einem niederen Bezugspotential verbunden. Ein derartigen Speicher ist aus der Zeitschrift "Electronics", February 28, 1980, S. 113 ff. bekannt.

Um eine Speicherzelle zu löschen, wird der Signalpegel einer Programmierzeile auf ein hohes Bezugspotential gebracht und die dazugehörende Spaltenleitung auf das niedere Bezugspotential. Das Beschreiben einer Speicherzelle erfolgt durch Anlegen des niederen Bezugspotentials an die Programmzeile und durch Belegen der Spaltenleitungen mit den dem Datenmuster entsprechenden Signalpegeln. In der Figur sind die zur Ansteuerung des Speichers 7 benötigten Pegelwandler nicht eingezeichnet, um die Figur zu vereinfachen. Aus diesem Grund wurde ferner für jeden der drei Speicherbereiche jeweils lediglich eine Zeile mit mehreren nicht weiter bezeichneten Speicherzellen wiedergegeben. Beispielsweise besteht bei einer byteweisen Abspeicherung von Daten eine Zeile aus 8 Speicherzellen. Durch die Adressleitung $A_\alpha$ wird der Anwenderspeicher festgelegt. Die Adressleitungen $A_\beta$ gehören zum Codedatenbereich, und die Adressleitungen $A_\gamma$ steuern die beiden Operationsdatenbereiche an.

Die Datenvergleichseinheit 5 ist über die Spaltenleitungen parallel mit dem Speicher 7 verbunden. Jeder Spaltenleitung ist bezüglich des Datenregisters 4" eine Dateneingangsleitung DER und eine Datenausgangsleitung DAR zur Übertragung jeweils eines Bits zugeordnet.

Die Datenvergleichslogik 5 weist zwischen jeder Dateneingangsleitung DER und den jeweils zugeordneten Datenausgangsleitungen DAR einen Komparator 57 auf, bestehend aus MOS-FETS 52, 53, 54 und einem negierenden UND-Glied 55. Die Ausgänge aller Komperatoren liegen gemeinsam an einem als Lastelement dienendem MOS-Fet 60, und bilden mit diesem ein NOR-Glied. Am gemeinsamen Verknüpfungspunkt der Komparatoren ist ein Vergleichssignal DOK abgreifbar, wenn die jeweiligen Signalpegel auf den Leitungspaaren DER und DAR gleich sind. Alle Spalten, die zum bitweisen Vergleich der Codedaten mit den Referenzdaten herangezogen werden, sind mit derartigen Komparatoren 5 versehen.

Daneben sind parallel zu den Komparatoren ein erster Zustandsänderungsanzeiger 59, bestehend aus einem NOR-Glied 56 und zweite Zustandsänderungsanzeiger 58, jeweils bestehend aus einem NOR-Glied 51 zur Ansteuerung eines MOS-Fet 50 vorgesehen.

Der erste Zustandsänderungsanzeiger 59 ist an die zum ersten Operationsdatenbereich (Freigabespeicher) führenden Dateneingangs- bzw. Datenausgangsleitungen DER', DAR' geschaltet.

Die zweiten Zustandsänderungsanzeiger sind dem zweiten Operationsdatenbereich (Fehleranzeiger) zugeordnet. Die Ausgänge aller zweiten Zustandsänderungsanzeiger 58 sind gemeinsam an den Steuereingang eines weiteren als Lastelement dienenden MOS-Fet 61 geschaltet, welches zusammen mit den zweiten Zustandsänderungsanzeigern 58 ein NOR-Glied bildet. Am gemeinsamen Verknüpfungspunkt aller zweiten Zustandsänderungsanzeiger 58 liegt ein zweites Zustandsänderungssignal VOK an, wenn mindestens bei einer Spalte das über einen Negator 63 zugeführte Dateneingangssignal DER und das Datenausgangssignal DAR den Pegel null annehmen.

Diese Bedingung ist dann erfüllt, wenn mindestens bei einer zugeordneten Speicherzelle des zweiten Operationsdatenbereichs der Löschpegel (logischer Pegel 1) nicht verändert wurde und der Inhalt des Datenregisters 1" an dieser Stelle den logischen Wert null aufweist. Das Signal VOK gibt also für den Fehleranzeigespeicher an, ob auf mindestens einer Spaltenleitung, die durch den logischen Wert null auf der Datenausgangsleitung DAR ausgewählt wurde, eine noch gelöschte Speicherzelle vorhanden ist. Darüberhinaus zeigt das Zustandsänderungssignal VOK durch den logischen Pegel null an, wenn der zweite Operationsdatenbereich vollständig geschrieben ist.

Wie in einem späteren Abschnitt beschrieben wird, wird eine von der Rechenanlage 13 einzugebende Steuerinformation mit log Pegel 0 dem Datenregister 1" in diese Speicherzelle eingeschrieben, wenn die Komparatoren 5 keine Übereinstimmung zwischen Referenzdaten und Codewort feststellen. Somit hat der zweite Operationsdatenbereich die Funktion eines Fehlerzählers bei erfolglosen Freigabeoperationen.

Der erste Zustandsänderungsanzeiger 59 liegt zwischen den dem ersten Operationsdatenbereich zugeordneten Dateneingangsleitungen DER' und DAR'. An seinem Ausgang ist das erste Zustandsänderungssignal SOK abgreifbar. Es zeigt an, ob - unter der Voraussetzung des logischen Pegels 0 - auf der Datenausgangsleitung DAR als Schreibanforderung in den ersten Operationsdatenbereich mit dem logischen Wert 0 geschrieben wurde. Um den ersten Operationsdatenbereich beschreiben zu können, muß nach der Steuerworteingabe in das Register 1 der Signalpegel auf DAR' stets auf logisch 0 stehen und somit die Schreibbedingung erfüllen.

Der Komparator 57 besteht aus dem NAND-Glied 55 und den MOS-FETs 52, 53, 54. Das UND-Glied 55 ist eingangsseitig mit einer Spaltenleitung und der Datenausgangsleitung DAR verbunden. Sind die logischen Pegel beider Leitungen 0, so sperren die MOS-FETs 53 und 54 und das Signal DOK nimmt den logischen Wert 1 an. Sind dagegen die logischen Werte der Spaltenleitung und der Datenausgangsleitung DAR "1", so wird der MOS-Fet 52 gesperrt, wobei das Signal DOK ebenfalls den logischen Wert 1 annimmt. Ist bezüglich einer einzigen Spalte diese Übereinstimmung nicht gegeben, so wird das Signal DOK über die MOS-FETs 52, 53 bzw. 52, 54 auf den logischen Wert 0 gezogen.

In jedem zweiten Zustandsänderungsanzeiger 58 wird das Ausgangssignal nur dann über die gesteuerte Strecke des MOS-FET 50 auf den logischen Wert 0 heruntergezogen, wenn das Signal auf wenigstens einer Datenausgangsleitung DAR und das negierte Signal auf der zugehörigen Dateneingangsleitung DER den logischen Wert 0 annehmen.

Zur Erzeugung des Signals VOK muß also wenigstens eine Speicherzelle mit dem Löschpegel logisch 1 im Freigabeanzeigeregister mit einer Schreibanforderung des logischen Wertes 0 auf der Datenausgangsleitung DAR zusammentreffen. Ist diese Bedingung nicht erfüllt, kann ein Schreibvorgang nicht durchgeführt und damit die Freigabeoperation nicht abgeschlossen werden.

Die Adressierlogik besteht aus zwei NOR-Gliedern 310, 320 und einem Negator 330. Sie hat die Aufgabe, bei einer Schreiboperation abhängig von Vergleichssignal DOK alternativ eine der beiden Operationsdatenbereiche auszuwählen.

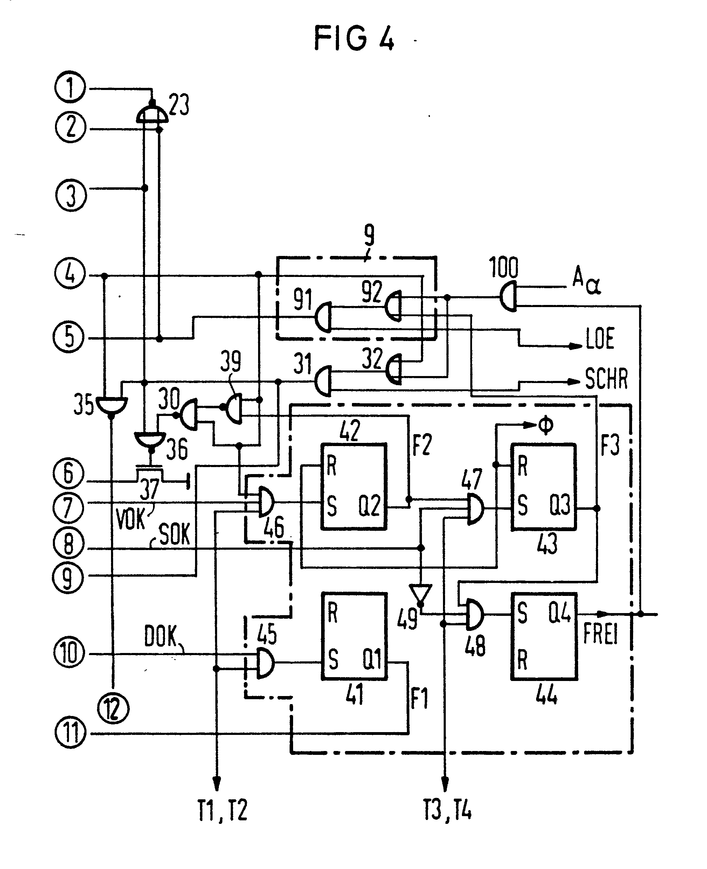

Dazu ist das eine NOR-Glied 320 eingangsseitig mit einem vom Freigabesignal DOK abgeleiteten ersten Freigabesignal F1 und das zweite NOR-Glied 310 über den Negator 330 mit dem ersten Freigabesignal F1 verbunden. Außerdem sind die beiden NOR-Glieder 310, 320 über (12) mit der in der Figur 4 im einzelnen wiedergegebenen Schreibsteuerung 3 verbunden.

Im übrigen sind alle Leitungsverbindungen aus der Nahtstelle von Figur 3 und Figur 4 durch eingekreiste Ziffern von (1) bis (12) gekennzeichnet.

Wie die Figur im Zusammenhang mit Figur 3 zeigt, besteht die Schreibsteuerung 3 aus dem UND-Glied 31, dem ODER-Glied 32, den NAND-Gliedern 30, 35, 36, 39 und den MOS-FETs 33, 37, 38 und 62. Alle Spaltenleitungen, die mit den Dateneingangsleitungen DER und DER' identisch sind, sind jeweils über die gesteuerte Strecke einens Last-MOS-FETs 38 und einen gemeinsamen MOS-FET 65 mit einem MOS-FET 37 verbunden. Die gesteuerte Strecke eines jeden MOS-FETs 62 ist über die gesteuerte Strecke eines MOS-FETs 64 mit dem niederen Bezugspotential verbunden. Der MOS-FET 64 wird vom Signal auf der Datenausgangsleitung DAR angesteuert.

Die NAND-Glieder 30, 36, 39 bilden eine logische Teilschaltung, die bei einer Anwahl des Operationsdatenbereiches über die Adressleitung $A_y$ wirkt und dann einen hohen Logikpegel abgibt, solange kein vom zweiten Zustandsänderungssignal VOK abhängiges Freigabesignal F2 erzeugt ist. Die logische Teilschaltung wirkt über das NAND-Glied 36 und den davon angesteuerten MOS-FET 37. Dessen gesteuerte Strecke verbindet die MOS-FETs 38 an jeder Spaltenleitung über den gemeinsamen MOS-FET 65 mit dem niederen Bezugspotential, wenn die logische Teilschaltung wirksam ist.

Solange der MOS-FET 37 leitet, wirken die MOS-FETs 38, 65, 66 als Spannungsteiler, der die Maximalspannung auf allen Spalten über die Spannungsteilung auf einen niedrigeren Spannungspegel begrenzt. Diese Bedingungen haben Einfluß auf den MOS-FET 62, wenn an diesem ein Schreibsignal SCHR liegt.

Beim Auftreten des zweiten Freigabesignals F2 und beim Anlegen einer Adresse auf den Adressleitungen $A_y$ kann das Schreibsignal SCHR über die Logikglieder 32, 31 und 36 wirksam werden und den MOS-FET 37 sperren. Damit kann die Spannung an den Spaltenleitungen über die Last-MOS-FETs 66 auf eine Maximalspannung ansteigen, die lt. zitierter Literaturstelle "Electronics", February 28, 1980, S. 113 ff. für einen Schreibvorgang ausreicht. Die Spannung an einer Spaltenleitung kann also auf einen ausreichenden Wert von beispielsweise 20 Volt ansteigen, wenn der MOS-FET 64 über den logischen Wert 0 auf der Datenausgangsleitung DAR gesperrt ist, was bezüglich der Spaltenleitung eine Schreibanforderung darstellt. Während der Dauer des Schreibsignals SCHR wird der MOS-FET 62 leitend und damit die Spannung auf der Spaltenleitung auch von der im Datenregister 1'' stehenden Information abhängig. Über das eingegebene Steuerwort im Datenregister 1'' wird gleichzeitig eine Schreibanforderung gestellt, wenn auf der zum ersten Operationsdatenbereich führenden Datenausgangsleitung DAR' der logische Wert 0 anliegt und wenn im zweiten Operationsdatenbereich wenigstens noch eine Speicherzelle mit dem Löschpegel logisch 1 einer entsprechenden Datenausgangsleitung DAR mit einem logischen Pegel 0 gegenübersteht.

In welche der Datenausgangsleitungen DAR des zweiten Operationsdatenbereiches geschrieben wird, hängt von den MOS-FETs 34' bzw. 34 ab. Die Anwahl der Speicherzellen erfolgt beim Einschreiben über die Zeilensteuerung 8, welche die entsprechenden Programmierleitungen über einen MOS-FET 33 mit dem niederen Bezugspotential verbindet. Ist das erste Freigabesignal F1 nicht gesetzt, so sind während einer Schreiboperation alle dem zweiten Operationsdatenbereich zugeordneten MOS-FETs 34 gesperrt, so daß die Spannung auf den Spaltenleitungen den zum Schreiben erforderlichen Wert annehmen kann. Die zum ersten Operationsdatenbereich gehörende Spaltenleitung ist dagegen durch den MOS-FET 34' mit dem niederen Bezugspotential verbunden und kann somit nicht beschrieben werden.

Beim Auftreten des ersten Freigabesignals F1 sind dagegen alle MOS-FETs 34 leitend und der MOS-FET 34' gesperrt. Somit kann ein Schreibvorgang nur im ersten Operationsdatenbereich durchgeführt werden. Das Beschreiben des Anwenderdatenbereiches ist vom vierten Freigabesignal FREI abhängig, wie in einem späteren Abschnitt in Zusammenhang mit der Zugriffsicherung beschrieben wird.

Die Löschsteuereinheit 9 besteht aus dem UND-Glied 91, dem ODER-Glied 92 und dem MOS-FET 93. Sie weist eine auf den Operationsdatenspeicher wirkende aus dem ODER-Glied 92 bestehende Löschsperre auf. Diese wird über ein von den beiden Zustandsänderungsignalen VOK, SOK abhängiges drittes Freigabesignal F3 aufgehoben. In diesem Fall verbinden die gesteuerten Strecken der beiden MOS-FETs 83 und 93 die Programmierleitungen des Operationsdatenspeichers mit dem zum Löschvorgang erforderlichen hohen Bezugspotential.

Wie eine Schreiboperation kann auch eine Löschoperation bezüglich des Anwenderdatenspeichers nur beim Auftreten des vierten Freigabesignals FREI durchgeführt werden.

Die Lesesteuerung 2 besteht aus dem NOR-Glied 23 und den als Lesesperre dienenden MOS-FETs 20. Die gesteuerte Strecke des MOS-FET 24 verbindet über die Zeilensteuerung 8 alle Programmierleitungen mit einer Lesespannung $U_{LES}$. Da das NOR-Glied 23 eingangsseitig mit den Ausgängen der Schreib- und Löschsteuerung 3, 9 verbunden ist, werden die Spaltenleitungen nur mit einer Lesespannung beaufschlagt, wenn weder ein Schreibsignal SCHR noch ein Löschsignal LOE wirksam ist.

Die gesteuerten Strecken der MOS-FETs 20 liegen in den Dateneingangsleitungen DER, DER' vor dem Datenregister 1".

Ihre Steuereingänge sind über einen Negator 22 und ein UND-Glied 21 mit den Adressleitungen $A_\beta$ des Codedatenspeichers verbunden. Solange dieser adressiert ist, sind die Dateneingangsleitungen DER, DER' gesperrt. Wegen des UND-Gliedes 21 können Daten aus dem Speicher 7 in das Datenregister 1" nur übernommen werden, wenn der Codedatenspeicher nicht adressiert ist und wenn ein Setzsignal $Ø_S$ anliegt.

Die Zeilensteuerung 8 besteht aus den MOS-FETs 81, 82 und im Zusammenhang mit der Löschsteuerung aus dem MOS-FET 83. Die gesteuerten Strecken der MOS-FETs 81, 82 liegen am Ausgang der Programmierleitungen des Anwenderdatenbereiches bzw. des Codedatenbereiches. Sie sind über die Adressierleitungen $A_\alpha$ bzw. $A_\beta$ ansteuerbar. Über einen gemeinsamen Verbindungspunkt sind sie mit den gesteuerten Strecken der MOS-FETs 24, 93 und 33 verbunden. Abhängig von der Wirksamkeit eines Lese-, eines Lösch- oder Schreibsignals verbinden sie die Programmierleitungen mit der Lesespannung $U_{LES}$, dem hohen Bezugspotential bzw. dem niederen Bezugspotential.

Die Ablaufsteuerung 4 besteht aus einem ersten, zweiten, dritten, vierten Flip-Flop 41, 42, 43, 44 und aus einem ersten, zweiten, dritten, vierten UND-Glied 45, 46, 47, 48 vor den Steuereingängen der Flip-Flops. Sie dient zur Ansteuerung der Lösch-, Schreib- und Lesesteuerung 9, 3, 2 unter Berücksichtigung des Vergleichssignals DOK und der beiden Zustandsänderungssignale VOK und SOK. Die Ablaufsteuerung erzeugt das erste, zweite und dritte Frigabesignal F1, F2, F3 und ein viertes Frigabesignal FREI.

Wegen der UND-Glieder 45, 46 können die einen Kippstufen 41, 42 nur beim Auftreten von ersten Taktimpulsen T1, T2 gesetzt werden. Ebenso können die anderen Flip-Flops 43, 43 nur mit Signalen beaufschlagt werden, wenn über die UND-glieder 47, 48 weitere Taktsignale T3 bzw. T4 auftreten. Diese Taktsignale dienen lediglich zur Synchronisation der Ablaufsteuerung.

Das Flip-Flop 41 wird über das UND-Glied 45 von Vergleichssignal DOK gesetzt. In diesem Fall ist am Ausgang Q1 das erste Freigabesignal F1 abgreifbar. Das zweite Flip-Flop 42 wird beim Auftreten des zweiten Zustandsänderungssignals VOK und beim Anlegen der Adresse des Operationsdatenbereiches gesetzt. An seinem Ausgang Q2 liegt das zweite Freigabesignal F2. Davon abhängig und vom Auftreten des ersten Zustandsänderungssignals SOK wird über das UND-Glied 47 das dritte Flip-Flop 41 gesetzt. Dessen Ausgangssignal am Ausgang Q3 stellt das dritte Freigabesignal F3 dar. Ebenso wie das zweite Flip-Flop 42 wird es über den Schiebetakt Ø zurückgesetzt. Somit ist sichergestellt, daß jede Datenänderung im Schieberegister 1" eine Wiederholung der Kontrollvorgänge erforderlich macht.

Das Auftreten des dritten Freigabesignals F3 ist Voraussetzung zum Setzen des vierten Flip-Flops 44 und zur Abgabe des vierten Freigabesignals FREI am Ausgang Q4. Ferner kann das vierte Flip-Flop 44 nur dann gesetzt werden, wenn das erste Zustandsänderungssignal SOK nicht erzeugt ist. Diese Bedingung ist mittels eines Negators 49 erzwungen, an welchem das erste Zustandsänderungssignal SOK anliegt, und welcher eingangsseitig mit dem UND-Glied 48 verbunden ist.

Das vierte Freigabesignal FREI steuert eine Zugriffssicherung, mit welcher je nach Anwendungsfall der Zugriff auf den Anwendungsspeicher kontrollierbar ist. Sie besteht in dem wiedergegebenen Beispiel aus dem UND-Glied 100, an welchem eingangsseitig das vierte Freigabesignal FREI und über die Adreßleitung $A_\alpha$ die Adresse des Anwenderspeichers anliegt.

Der Ausgang des UND-Gliedes 100 ist über die ODER-Glieder 32, 92 mit den UND-Gliedern 31 bzw. 91 verbunden, an welchen das Schreibsignal SCHR bzw. das Löschsignal LOE anliegen. Die Zugriffssicherung verhindert somit ein Wirksamwerden des Schreibsignals SCHR und des Löschsignals LOE bezüglich des Anwenderdatenspeichers, wenn die Freigabeoperation nicht erfolgreich mit dem Erzeugen des vierten Freigabesignals FREI abgeschlossen ist.

Im folgenden wird die Funktion der Kontrolleinheit anhand von drei möglichen Benutzungsfällen A, B, C, beschrieben. Im ersten Fall wird angenommen, daß der Benutzer oder ein Rechnerprogramm ein oder mehrere Codewörter richtig und in der vorgeschriebenen Reihenfolge eingibt. Nach dem Ablauf der Vergleichsoperation im Komparator 57 wird das Vergleichssignal DOK an die Ablaufsteuerung 4 gegeben. Anschließend wird das von einer Rechenanlage bereitgestellte Steuerwort mit dem gelöschten Speicherinhalt der beiden Operationsdatenbereiche verglichen. Unter der oben gemachten Voraussetzung bewirkt dieser Vergleich, daß das zweite Zustandsänderungssignal VOK abgegeben wird, welches über die Ablaufsteuerung 4 die Schreibsperre der Schreibsteuerung 3 aufhebt. Bei dem darauffolgenden Schreibvorgang wird - gesteuert vom Vergleichssignal DOK - der erste Operationsdatenbereich (Freigabebereich) beschrieben. Die Änderung dieses Speicherinhalts wird durch den ersten Zustandsänderungsanzeiger 59 festgestellt und durch Abgabe des ersten Zustandsänderungssignals SOK an die Ablaufsteuerung 4 gemeldet. Das Auftreten dieses Signals ist Voraussetzung für die Abgabe des vierten Freigabesignals FREI. Außerdem hebt es die auf die beiden Operationsdatenbereiche wirkende Löschsperre auf, so daß diese in einer anschließenden Löschoperation gelöscht werden können.

Im Fall B gibt der berechtigte Benutzer irrümlich ein falsches Codewort ein, bevor er seinen Irrtum bemerkt und die falsche Eingabe korrigiert. Somit wird das Vergleichssignal DOK nicht erzeugt, so daß in dem sich an den Steuerwortvergleich sich anschließenden Schreibvorgang nicht der erste Codedatenbereich beschrieben wird. Statt dessen werden die durch den logischen Wert null auf den Dateneingangssignalen DAR ausgewählten Speicherplätze des zweiten Operationsdatenbereichs beschrieben. Das hat zur Folge, daß das zweite Zustandsänderungssignal VOK nicht erzeugt wird. Dieser "Fehlversuch" bleibt im zweiten Operationsdatenbereich gespeichert, da die Löschsperre wirksam ist. Solange der jedoch nicht vollständig beschrieben ist, kann die Eingabe eines Codewortes wiederholt werden.

Im Fall C bietet die nahezu unbegrenzte Auswahl von Codewörtern eine äußerst geringe Wahrscheinlichkeit dafür, daß innerhalb der vorgegebenen Anzahl von "Fehlversuchen" das zufällig richtige Codewort eingegeben wird. Nachdem der begrenzte zweite Operationsdatenbereich durch Fehlversuche vollständig überschrieben ist, sind weder Schreib- noch Löschoperationen durchführbar. Daher wird das vierte Freigabesignal FREI nicht erzeugt. Da dieser Zustand nicht mehr rückgängig zu machen ist, ist jeder Zugriff auf den Speicher 7 irreversibel unterbunden.

**Patentansprüche**

1. Monolithisch integrierbare Schaltungsanordnung, bestehend aus einem Speicher mit nichtflüchtigen, elektrisch schreib- und löschbaren Speicherzellen, einer Adreßdekoderschaltung zur Adressierung der Speicherzellen und aus einer Kontrolleinheit, die einen Zugriff zu Speicherbereichen von einer Freigabeoperation mit Datenvergleich zwischen gespeicherten Referenzdaten und von außen eingegebenen Codedaten abhängig macht und die eine Schreibsteuereinheit zum Beschreiben einer Speicherzelle eines ersten Operationsdatenspeicherbereichs bei Datengleichheit und eines zweiten Operationsdatenspeicherbereichs bei Datenungleichheit und mindestens einen Komparator (57) enthält, der an seinem Ausgang bei Datengleichheit ein Vergleichssignal abgibt, gekennzeichnet durch eine Adressierlogik (310, 320, 330), die bei Abgabe des Vergleichssignals (DOK) den ersten, ansonsten den zweiten Operationsdatenspeicherbereich für einen Schreibvorgang auswählt, durch eine Löschsteuereinheit (9), die beide Operationsdatenspeicherbereiche löscht, wenn der erste Operationsdatenspeicherbereich beschrieben wurde und durch eine Zustandsänderungslogik (58, 59), die vor jedem Schreibvorgang das Vorhandensein mindestens einer freien Speicherzelle im zweiten Operationsdatenspeicherbereich und vor jedem Löschvorgang einen vorhergehender Schreibvorgang im ersten Operationsdatenspeicherbereich feststellt.

2. Schaltungsanordnung nach Anspruch 1, gekennzeichnet, durch mindestens einen ersten, dem ersten Operationsdatenspeicherbereich zugeordneten Zustandsänderungsanzeiger (59) zur Abgabe eines ersten Zustandsänderungssignals (SOK) bei einer Änderung des Speicherinhalts des ersten Operationsdatenspeicherbereichs.

3. Schaltungsanordnung nach einen der Ansprüche 1 oder 2, gekennzeichnet durch mindestens einen zwieten, dem zweiten Operationsdatenspeicherbereich zugeordneten Zustandsänderungsanzeiger (58) zur Abgabe eines zweiten Zustandsänderungssignals (VOK) bei einer Adressierung einer freien Speicherzelle des zweiten Operationsdatenspeicherbereiches.

4. Schaltungsanordnung nach Anspruch 3, gekennzeichnet durch mehrere Speicherzellen im zweiten Operationsdatenspeicherbereich, durch mehrere, den Speicherzellen jeweils zugeordnete zweite Zustandsänderungsanzeiger (58), deren Ausgänge über eine logische ODER-Schaltung miteinander verknüpft sind.

5. Schaltungsanordnung nach einem der Ansprüche 1 bis 4, dadurch gekennzeichnet, daß die Schreibsteuereinheit (3) eine vom Ausgangssignal des zweiten Zustandsänderungsanzeigers (58) aufhebbare Schreibsperre für die beiden Operationsdatenspeicherbereiche aufweist.

6. Schaltungsanordnung nach einem der Ansprüche 1 bis 5, dadurch gekennzeichnet, daß die Löschsteuereinheit (9) eine vom Ausgangssignal (SOK) des ersten Zustandsänderungsanzeigers (59) aufhebbare Löschsperre für die beiden Operationsdatenspeicherbereiche aufweist.

7. Schaltungsanordnung nach einem der Ansprüche 1 bis 6, gekennzeichnet durch eine Ablaufsteuerung (4), die bistabile Schaltelemente (41 bis 44) und Logikglieder (45 bis 48) enthält, wobei ein erstes bistabiles Schaltelement (41) die Adressierlogik (310, 320, 330) steuert.

8. Schaltungsanordnung nach einem der Ansprüche 1 bis 7, gekennzeichnet durch ein zweites bistabiles Schaltelement (42) der Ablaufsteuerung (4) zur Freigabe der Schreibsperre nach dem Auftreten des zweiten Zustandsänderungssignals (VOK).

9. Schaltungsanordnung nach Anspruch 8, gekennzeichnet durch ein drittes bistabiles Schaltelement (43) und ein Logikglied (47) der Ablaufsteuerung (4) zur Freigabe der Löschsperre nach dem Auftreten des ersten Zustandsänderungssignals (SOK) und dem Setzen des zweiten bistabilen Schaltelements (42).

10. Schaltungsanordnung nach einem der Ansprüche 8 oder 9, gekennzeichnet durch ein viertes bistabiles Schaltelement (44) und ein weiteres Logikglied (48) der Ablaufsteuerung (4) zur Abgabe eines Freigabesignals (FREI), sobald das erste Zustandsänderungssignal (SOK) verschwindet und das dritte bistabile Schaltelement (43) gesetzt ist.

11. Schaltungsanordnung nach einem der Ansprüche 1 bis 10, gekennzeichnet durch ein mittels eines Schiebetaktes (Ø) ein- bzw. auslesbares Schieberegister (1) zur Aufnahme eines Codewortes, und durch eine Vorrichtung zum Rücksetzen des zweiten und dritten bistabilen Schaltelements (42, 43) der Ablaufsteuerung (4) in einen Ausgangszustand beim Auftreten des Schiebetaktes (Ø).

**Claims**

1. A monolithic integrated circuit arrangement comprising a store containing non-volatile storage cells which can be electrically written and erased; an address decoder circuit which addresses the storage cells, a monitoring unit which renders access to storage zones dependent upon a release operation comprising a data comparison between stored reference data items and externally-input code data items, a write control unit which writes into a storage cell of a first operations data storage zone in the event that the data items are identical or writes into a storage cell of a second operations data storage zone in the event that the data items are not identical, and at least one comparator which emits a comparison signal from its output in the event that the data items are identical, characterised by an addressing logic unit (310, 320, 330) which selects the first operations data storage zone for a write procedure when the comparison signal (DOK) is emitted, and otherwise selects the second operations data storage zone; an erase control unit (9) which erases the two operations storage zones when the first operations data storage zone has been written into; and a change-of-status logic unit (58, 59) which determines the presence of at least one free storage cell in the second operations data storage zone prior to each write procedure and, prior to each erase procedure, determines a previous write procedure in the first operations data storage zone.

2. A circuit arrangement as claimed in Claim 1, characterised by at least one first change-of-status indicator (59) which is assigned to the first operations data storage zone, and which emits a first change-of-status signal (SOK) in the event of a change in the store contents of the first operations data storage zone.

3. A circuit arrangement as claimed in one of Claims 1 or 2, characterised by at least one second change-of-status indicator (58) which is assigned to the second operations data storage zone, and which emits a second change-of-status signal (VOK) when a free storage cell of the second operations data storage zone is addressed.

4. A circuit arrangement as claimed in Claim 3, characterised by a plurality of storage cells in the second operations data storage zone, by a plurality of second change-of-status indicators (58) which are each assigned to the storage cells, and whose outputs are logic-linked to one another via a logic OR-circuit.

5. A circuit arrangement as claimed in one of Claims 1 to 4, characterised in that the write control unit (3) comprises a write block for the two operations data storage zones which can be cancelled by the output signal of the second change-of-status indicator (58).

6. A circuit arrangement as claimed in one of Claims 1 to 5, characterised in that the erase control unit (9) comprises an erase block for the two operations data storage zones which can be cancelled by the output signal of the first change-of-status indicator (59).

7. A circuit arrangement as claimed in one of Claims 1 to 6, characterised by a flow control unit (4) which includes bistable switching elements (41 to 44) and logic elements (45 to 48), where a first bistable switching element (41) controls the addressing logic unit (310, 320, 330).

8. A circuit arrangement as claimed in one of Claims 1 to 7, characterised by a second bistable switching element (42) of the flow control unit (4) which releases the write block following the occurrence of the second change-of-status signal (VOK).

9. A circuit arrangement as claimed in Claim 8, characterised by a third bistable switching element (43) and by a logic element (47) of the flow control unit (4) which release the erase block following the occurrence of the first change-of-status signal (SOK) and the setting of the second bistable switching element (42).

10. A circuit arrangement as claimed in one of Claims 8 or 9, characterised by a fourth bistable switching element (44) and a further logic element (48) of the flow control unit (4) for the emission of a release signal (FREI) as soon as the first change-of-status signal (SOK) disappears and the third bistable switching element (43) is set.

11. A circuit arrangement as claimed in one of Claims 1 to 10, characterised by a shift register (1) which can be written into and read out by means of a shift clock signal (Ø) and which accommodates a code word, and characterised by a device which resets the second and third bistable switching elements (42, 43) of the flow control unit (4) into a starting state when the shift clock signal (Ø) occurs.

**Revendications**

1. Montage pouvant être intégré sous forme monolithique, constitué par une mémoire possédant des cellules de mémoire rémanentes, dans lesquelles on peut réaliser un enregistrement et un effacement électriques, un circuit décodeur d'adresses pour réaliser l'adressage des cellules de mémoire et une unité de contrôle, qui rend l'accès à des zones de mémoire dépendant d'une opération d'autorisation avec comparaison entre des données de référence mémorisées et des données de codes introduites de l'extérieur, et contient une unité de commande d'enregistrement servant à réaliser un enregistrement dans une cellule de mémoire d'une première zone d'une mémoire de données d'opérations, en cas d'égalité entre les données et d'une seconde zone de la mémoire de données d'opérations en cas d'inégalités entre les données, et au moins un comparateur (57) qui délivre un signal de comparaison au niveau de sa sortie, en cas d'égalité entre les données, caractérisé

par un circuit logique d'adressage (310, 320, 330), qui, lors de la délivrance du premier signal de comparaison (DOK), sélectionne la première zone ou sinon la seconde zone de la mémoire de données d'opérations pour une opération d'enregistrement,

par une unité (9) de commande d'effacement, qui efface les deux zones de la mémoire de données d'opérations, lorsqu'un enregistrement a été effectué dans la première zone de la mémoire de données d'opérations, et

par un circuit logique (58, 59) de changement d'état, qui détermine, avant chaque opération d'enregistrement, l'existence d'au moins une cellule de mémoire libre dans la seconde zone de la mémoire de données d'opérations et établit, avant chaque opération d'effacement, qu'un processus d'enregistrement a été exécuté antérieurement dans la première zone de la mémoire de données d'opérations.

2. Montage suivant la revendication 1, caractérisé par au moins un premier indicateur de changement d'état (59), associé à la première zone de la mémoire de données d'opérations et servant à délivrer un premier signal de changement d'état (SOK) dans le cas d'une modification du contenu de la première zone de la mémoire de données d'opérations.

3. Montage suivant l'une des revendications 1 ou 2, caractérisé par au moins un second indicateur de changement d'état (58) associé à la seconde zone de la mémoire de données d'opérations et servant à délivrer un second signal de changement d'état (VOK) dans le cas d'un adressage d'une cellule de mémoire libre de la seconde zone de la mémoire de données d'opérations.

4. Montage suivant la revendication 3, caractérisé par plusieurs cellules de mémoire situées dans la seconde zone de la mémoire de données d'opérations, par plusieurs seconds indicateurs de changement d'état (58), qui sont associés respectivement aux cellules de mémoire et dont les sorties sont combinées entre elles par l'intermédiaire d'un circuit OU logique.

5. Montage suivant l'une des revendications 1 à 4, caractérisé par le fait que l'unité de commande d'enregistrement (3) comporte un circuit de blocage d'enregistrement, pouvant être débloqué par le signal de sortie du second indicateur de changement d'état (58), pour les deux zones de la mémoire de données d'opérations.

6. Montage suivant l'une des revendications 1 à 5, caractérisé par le fait que l'unité de commande d'effacement (9) comporte un circuit de blocage d'effacement, pouvant être débloqué par le signal de sortie (SOK) du premier indicateur de changement d'état (59), pour les deux zones de la mémoire de données d'opérations.

7. Montage suivant l'une des revendications 1 à 6, caractérisé par un dispositif de commande d'exécution (4), qui contient des éléments de commutation bistables (41 à 44) et des circuits logiques (45 à 48), un premier élément de commutation bistable (41) commandant le circuit logique d'adressage (310, 320, 330).

8. Montage suivant l'une des revendications 1 à 7, caractérisé par un second élément de commutation bistable (42) du dispositif de commande d'exécution (4) pour le déblocage du circuit de blocage d'enregistrement après l'apparition du second signal de changement d'état (VOK).

9. Montage suivant la revendication 8, caractérisé par un troisième élément de commutation bistable (43) et un circuit logique (47) du dispositif de commande d'exécution (4) pour le déblocage du circuit de blocage d'effacement après l'apparition du premier signal de changement d'état (SOK) et le positionnement du second élément de commutation bistable (42).

10. Montage suivant l'une des revendications 8 ou 9, caractérisé par un quatrième élément de commutation bistable (44) et un autre circuit logique (48) du dispositif de commande d'exécution (4) pour la délivrance d'un signal de libération (FREI) dès que le premier signal de changement d'état (SOK) disparaît et que le troisième élément de commutation bistable (43) est positionné.

11. Montage suivant l'une des revendications 1 à 10, caractérisé par un registre à décalage (1) dans lequel on peut faire un enregistrement ou une lecture à l'aide d'une impulsion de cadence de transfert (Ø), pour la réception d'un mot de code, et par un dispositif servant à ramener dans un état initial les second et troisième éléments de commutation bistables (42, 43) du dispositif de commande d'exécution (4), lors de l'apparition de l'impulsion de cadence de transfert (Ø).

FIG 1

FIG 2

FIG 3

# FIG 4